# EUROPÄISCHE PATENTSCHRIFT

(11) **EP 3 961 559 B1**
(45) Veröffentlichungstag und Bekanntmachung des Hinweises auf die Patenterteilung: **26.04.2023**
(21) Anmeldenummer: 21183709.1
(22) Anmeldetag: 05.07.2021
(51) Int. Cl.: G06T 7/00

(54) **VERFAHREN UND VORRICHTUNG ZUM ERMITTELN VON DEFEKTEN WÄHREND EINES OBERFLÄCHENMODIFIZIERUNGSVERFAHRENS**
METHOD AND DEVICE FOR DETECTING DEFECTS DURING SURFACE MODIFICATION METHOD
PROCÉDÉ ET DISPOSITIF DE DÉTERMINATION DES DÉFAUTS LORS D'UN PROCÉDÉ DE MODIFICATION DE SURFACE

(30) Priorität: 31.08.2020 DE 102020210974
(43) Veröffentlichungstag der Anmeldung: 02.03.2022
(73) Patentinhaber: Ford Global Technologies, LLC, Dearborn, MI 48126 (US)
(72) Erfinder: Ölscher, Michael, 50126 Bergheim (DE); Martinius, Moritz, 50672 Köln (DE); Newton, David, 50859 Köln (DE); Yigit, Ümit, 50739 Köln (DE)
(74) Vertreter: Markowitz, Markus

(56) Entgegenhaltungen:
- WO-A1-2005/095043
- WO-A1-2017/200524
- WO-A1-2020/104102
- US-A1- 2017 343 481
- KIM J S ET AL: "A ROBUST METHOD FOR VISION-BASED SEAM TRACKING IN ROBOTIC ARC WELDING", PROCEEDINGS OF THE INTERNATIONAL SYMPOSIUM ON INTELLIGENT CONTROL. MONTEREY, AUG. 27 - 29, 1995; [PROCEEDINGS OF THE INTERNATIONAL SYMPOSIUM ON INTELLIGENT CONTROL], NEW YORK, IEEE, US, 27. August 1995 (1995-08-27), Seiten 363-368, XP000684186, ISBN: 978-0-7803-2723-8

## Beschreibung

Laserstrahlhartlöten ist ein bekanntes Fügeverfahren. Im Automobilbereich wird Laserstrahlhartlöten beispielsweise zum Fügen von verzinkten Stahlblechen in der Serienfertigung von Automobilkarosserien, z. B. zur Verbindung des Daches mit den Seitenteilen oder zum Fügen eines zweiteiligen Heckklappenaußenblechs genutzt. Hierbei wird ein Laserstrahl an der Fügestelle entlanggeführt, wobei er einen Zusatzwerkstoff, z. B. einen Kupfer-Silizium-Draht, aufschmilzt, welcher beim Erkalten die zu fügenden Bauteile miteinander verbindet.

Gegenüber anderen Fügeverfahren hat das Laserstrahlhartlöten den Vorteil, dass Fügeverbindungen mit einer hohen Festigkeit bei gleichzeitig hoher ästhetischer Oberflächenqualität erzeugt werden können.

Ein weiteres bekanntes Fügeverfahren ist das Laserstrahlschweißen, z. B. zum Fügen von Leichtbauteilen aus Aluminium unter Zuhilfenahme eines Zusatzdrahts.

Der Aspekt der Oberflächenqualität ist bei diesen Fügeverfahren in Hinblick auf die Kundenzufriedenheit von besonderer Bedeutung. Folglich wird eine

Qualitätskontrolle aller Löt- bzw. Schweißstellen benötigt. Standardmäßig erfolgt dies mittels manueller visueller Kontrolle. Eine solche Kontrolle ist jedoch sehr arbeitsintensiv. Daher gibt es Bestrebungen, das Qualitätssicherungsverfahren zu automatisieren.

Derartige automatisierte Qualitätssicherungsverfahren sind z. B. aus dem Gebiet des Laserstrahlschweißens bekannt. So offenbart die DE 11 2010 003 406 T5 ein Verfahren zur Bestimmung einer Schweißgüte, bei dem ein Bild des Schweißabschnitts mit einer Hochgeschwindigkeitskamera erfasst wird. Im erfassten Bild wird das Auftreten von Parametern, wie z. B. der Schweißspritzeranzahl pro Längeneinheit, untersucht. Die Schweißgüte wird anhand eines Vergleichs des analysierten Parameters mit einer zuvor erstellten Vergleichstabelle beurteilt. Dieses Verfahren setzt voraus, dass geeignete aussagekräftige Güteparameter aufgefunden werden können. Zudem ist das Erstellen einer ausreichend genauen Vergleichstabelle sehr aufwändig und erfordert eine Vielzahl von zuvor ermittelten Datensätzen, die einen Zusammenhang zwischen dem Güteparameter und der tatsächlichen Güte widerspiegeln.

Ein weiteres Qualitätssicherungsverfahren, das für das Laserstrahlschweißen von Rohren genutzt wird, ist aus der US 2016/ 0 203 596 A1 bekannt. Hierbei wird eine Kamera auf der dem Laser abgewandten Seite, also z. B. im Inneren des Rohres, positioniert, mit deren Hilfe Bilder der Fügestelle aufgezeichnet werden. Anhand einer Bildauswertung, die eine Zuordnung von Helligkeitswerten zu Bildpixeln umfasst, wird die Anzahl von Defekten bestimmt. Dieses Verfahren ist jedoch nur für Fügeverfahren einsetzbar, die eine Bilderfassung von der dem Laser abgewandten Seite ermöglichen und bei denen mittels der beschriebenen Helligkeitsauswertung auf das Vorliegen von Defekten geschlossen werden kann. Für Oberflächen höchster Güte ist dieses Verfahren aufgrund seiner Ungenauigkeit nicht geeignet.

Eine höhere Genauigkeit kann mit dem in der US 2015/ 0 001 196 A1 beschriebenen Verfahren erreicht werden, dass zur Bildanalyse ein neuronales Netz nutzt. Von einer gebildeten Schweißnaht wird ein Bild aufgenommen. Eine Klassifizierung des Bildes und damit der Schweißnaht als normal oder defekt kann mittels eines neuronalen Netzes erfolgen, wobei die Genauigkeit der Klassifikation mittels der Eigenschaften des neuronalen Netzes variiert werden kann.

WO 2020/104102 A1, PreciTec GmbH & Co. KG beschreibt ein System zur Erkennung eines Bearbeitungsfehlers für ein Laserbearbeitungssystem zur Bearbeitung eines Werkstücks mit einer Erfassungseinheit zum Erfassen von Bilddaten und Höhendaten einer bearbeiteten Werkstückoberfläche und einer Recheneinheit, wobei die Recheneinheit eingerichtet ist, einem Eingangstensor, der auf den erfassten Bilddaten und Höhendaten basiert, zu bilden, und basierend auf dem Eingangstensor, mittels eines neuronalen Netzwerks, einen Ausgangstensor zu bestimmen, der Informationen über einen Bearbeitungsfehler enthält.

WO 2005/095043 A1, Servo-Robot Inc. beschreibt eine Laserschweißbaugruppe, die zur gleichzeitigen Durchführung von Nahtverfolgung und Nahtinspektion einer Verbindung verwendet wird, während sich die Laserschweißbaugruppe in relativer Bewegung entlang der Verbindung befindet.

Kim et al.: "A robust method for vision-based seam tracking in robotic arc welding", Proceedings of the Internationla Symposium on Intelligent Control, 27-29 August 1995, Seiten 363-368 beschreibt ein robotergestütztes Nahtverfolgungssystem, das gegen einige Schweißgeräusche wie Lichtbogenblendung, Schweißspritzer, Rauch usw. robust sein soll. Insbesondere wird eine syntaktische Analyse verwendet, um die Zuverlässigkeit der Extraktion der Verbindungsmerkmale zu verbessern. Die so gewonnenen Fugenmerkmale werden zur Extraktion der 3-dimensionalen Informationen der Schweißnaht verwendet, um anschließend die Roboterbahnkorrektur durchzuführen.

US 2017/343481 A1, Jahanshahi et al. beschreibt ein robotergestütztes Laserschweißnaht-Verfolgungssystem, das auf die Robustheit gegenüber Nebeneffekten des Schweißens wie Lichtbogenblendung, Schweißspritzer oder Rauch abzielt. Insbesondere wird eine syntaktische Analyse verwendet, um die Zuverlässigkeit der Extraktion der Verbindungsmerkmale zu erhöhen. Aus den so gewonnenen Fugenmerkmalen werden 3D-Informationen der Schweißfuge extrahiert und anschließend für eine Bahnkorrektur des Schweißroboters verwendet.

WO 2017/200524 A1, United Technologies Corp. beschreibt die Bestimmung einer "Region of Interest" (interessierender Bereich, ROI) einer Struktur in einem Bilddaten-Frame, wobei interessierende Teilbereiche innerhalb des Bilddaten-Frames auf der Grundlage der Bestimmung der ROI erkannt werden. Ein Modell, das ein tiefes neuronales Faltungsnetzwerk umfasst, wird auf die interessierenden Teilbereich angewendet, um eine Klassifizierung von Defekten in der Struktur zu erhalten.

Die Erfinder der vorliegenden Erfindung versuchten ebenfalls, zur Ermittlung der Oberflächenqualität von Lötnähten einer Automobilkarosserie Bilder mittels eines neuronalen Netzes zu klassifizieren. Hierfür wurden zunächst Trainingsdatensätze in einem halbautomatischen Verfahren generiert, die ein Bild der Lötnähte als defekt oder nicht defekt charakterisieren. Es stellte sich jedoch heraus, dass die Anzahl der benötigten Trainingsdatensätze für die erforderliche Genauigkeit des Qualitätssicherungsverfahrens so groß ist, dass in Anbetracht der Anzahl der täglich hergestellten Fahrzeugkarosserien und des geringen Anteils an Fahrzeugkarosserien mit defekten Lötnähten ein sehr langer Zeitraum bzw. ein erheblicher Aufwand für die Generierung geeigneter Trainingsdatensätze erforderlich wäre.

Daraufhin verwendeten die Erfinder der vorliegenden Erfindung ein bereits existierendes neuronales Netz, nämlich das neuronale Netz ResNet50, bei dem es sich um ein residuales faltendes neuronales Netz (engl. residual convolutional neural network) mit 50 Schichten (engl. layer) handelt, das mit mehr als einer Million Bildern trainiert worden ist und Bilder mehr als 1000 Kategorien zuordnen kann. Das Netz ResNet50 wurde daraufhin mittels für das zu beurteilende Lötverfahren spezifischen Trainingsdatensätzen weiter trainiert. Zudem wurden weitere Maschinenlerntechniken eingesetzt, um die Genauigkeit weiter zu verbessern.

Es stellte sich heraus, dass für die Detektion eines Defekts in einem einzigen Bild eine Genauigkeit von bis zu 99,6 % erreicht werden kann. Angesichts der Tatsache, dass bei einem einzigen Lötvorgang zur Verbindung eines Automobildachs mit einem Seitenteil ca. 2500 Einzelbilder aufgenommen werden, ist diese Genauigkeit jedoch immer noch viel zu niedrig. In einer Untersuchung eines Videos eines gesamten Lötvorgangs wurde ein falsch-negativer Anteil von 65 % ermittelt, d. h. 65 % der als defekt charakterisierten Lötstellen waren tatsächlich nicht defekt. Folglich wären - falls überhaupt möglich - Trainingsdatensätze in großen Umfang notwendig, um ein neuronales Netz derart trainieren zu können, dass eine akzeptable Genauigkeit der Klassifizierung erhalten wird. Zudem limitiert das Risiko einer Überanpassung eine weitere Verbesserung der Genauigkeit.

Vor diesem Hintergrund ist es Aufgabe der Erfindung, ein Verfahren und eine Vorrichtung anzugeben, mit denen während eines Oberflächenmodifizierungsverfahren auftretende Defekte bei möglichst geringem Aufwand schnell und mit hoher Genauigkeit ermittelt werden können.

Gelöst wird die Aufgabe durch die Gegenstände der unabhängigen Ansprüche. Die abhängigen Ansprüche enthalten Ausführungsvarianten dieser erfindungsgemäßen Lösungen.

Ein erster Aspekt der Erfindung betrifft ein computerimplementiertes Verfahren zum Ermitteln von während einer Durchführung eines Oberflächenmodifizierungsverfahrens eines Oberflächenbereichs eines Bauteils auftretenden Defekten. Das Verfahren weist die folgenden Verfahrensschritte auf: Bereitstellen einer mehrere Einzelbilder aufweisenden Bildfolge eines zu beurteilenden Oberflächenbereichs, wobei jedes Einzelbild einen Bildausschnitt des Oberflächenbereichs zeigt und sich die Bildausschnitte der Einzelbilder zumindest teilweise überlappen, Zuordnen der Einzelbilder zu mindestens zwei Bildklassen, wovon mindestens eine Bildklasse das Attribut defekt trägt, im Folgenden als Defekt-Bildklasse bezeichnet, Prüfen, ob mehrere Einzelbilder einer vorgebbaren Anzahl in der Bildfolge direkt aufeinander folgender Einzelbilder der Defekt-Bildklasse zugeordnet wurden, und falls mehrere Einzelbilder der vorgebbaren Anzahl direkt aufeinander folgender Einzelbilder der Defekt-Bildklasse zugeordnet wurden, Ausgeben eines Defektsignals.

Computerimplementiert bedeutet, dass mindestens ein Verfahrensschritt, bevorzugt mehrere oder alle Verfahrensschritte, unter Verwendung eines Computerprogramms ausgeführt werden.

Mit dem Verfahren können während der Durchführung des Oberflächenmodifizierungsverfahrens auftretende Oberflächendefekte in dem Oberflächenbereich des Bauteils, wie z. B. Spritzer, Löcher, Risse etc., ermittelt werden. Derartige Oberflächendefekte können vorteilhaft noch während des Oberflächenmodifizierungsverfahrens, also in Echtzeit, d. h. in situ, ermittelt werden, so dass die entsprechenden Bauteile schnell als defekt erkannt und z. B. nachbehandelt oder aussortiert werden können.

Neben diesen Oberflächendefekten, die tatsächlich den Oberflächenbereich des Bauteils betreffen, besteht die Möglichkeit, auch Defekte einer Oberflächenmodifizierungseinrichtung zur Durchführung des Oberflächenmodifizierungsverfahrens, nachfolgend als Gerätedefekte bezeichnet, zu ermitteln. Derartige Gerätedefekte können das Oberflächenmodifizierungsverfahren negativ beeinflussen und zu Oberflächendefekten führen. Mithin können anhand der Ermittlung von Gerätedefekten Oberflächendefekte vermieden werden, so dass die Ausschussrate gesenkt werden kann. Wartungs- und Instandhaltungsmaßnahmen können rechtzeitig geplant und durchgeführt werden.

So stellten die Erfinder der vorliegenden Erfindung fest, dass mittels des vorgeschlagenen Verfahrens auch Defekte von optischen Elementen, wie z. B. Abdeck- oder Schutzgläsern, von Laserstrahloberflächenmodifizierungseinrichtungen ermittelt werden können. Derartige Gerätedefekte beeinflussen die Qualität der aufgenommenen bzw. aufzunehmenden Bilder, meist sogar bevor die Qualität des Oberflächenmodifizierungsverfahrens negativ beeinflusst wird und Oberflächendefekte auftreten. Beispielsweise kann ein defektes Schutzglas verschwommene Bilder hervorrufen. Wird nun in mehreren Einzelbildern der vorgebbaren Anzahl an direkt aufeinander folgenden Einzelbildern ein verschwommenes Bild ermittelt, kann daraus auf das Vorliegen eines Schutzglasdefekts geschlossen werden.

Weitere Gerätedefekte, die mittels des vorgeschlagenen Verfahrens ermittelt werden können, sind - je nach Art der Oberflächenmodifizierungseinrichtung - z. B. eine fehlerhafte Positionierung eines Lötdrahts oder Schweißdrahts, eine fehlerhafte Positionierung der Lötnaht oder Schweißnaht, etc. ermittelbar. Für die Ermittlung von Oberflächendefekten und Gerätedefekten können vorteilhaft dieselben Bilder genutzt werden, sodass Defekte beider Defektarten schnell und mit geringem Aufwand ermittelt werden können.

Durch die computerimplementierte Ausführung des Verfahrens wird weniger Personal zur visuellen Kontrolle der Bauteile benötigt, so dass Kosten eingespart werden können, und die Einhaltung von Qualitätsstandards kann zuverlässig umgesetzt werden, da die subjektive Komponente entfallen kann. Zudem wird eine Automatisierung der Qualitätssicherung ermöglicht. Ein weiterer Vorteil des Verfahrens ist, dass auch kleinste Oberflächendefekte ermittelt werden können, die bei einer manuellen visuellen Kontrolle möglicherweise nicht erkannt worden wären, z. B. Spritzer oder Poren mit einer Größe von lediglich 0,2 mm.

Das Verfahren ist für sämtliche Bauteile geeignet, die einem Oberflächenmodifizierungsverfahren unterworfen werden können, z. B. Metall-, Glas- , Keramik- oder Kunststoffbauteile. Mit umfasst sind Bauteile, die durch Fügen von Einzelteilen geschaffen werden.

Unter einem Oberflächenmodifizierungsverfahren wird dabei ein Verfahren verstanden, das zu einer zeitweisen oder dauerhaften Veränderung zumindest auch der Oberfläche des Bauteils führt, so dass eine Auswirkung des Oberflächenmodifizierungsverfahrens anhand von Bildaufnahmen des behandelten Oberflächenbereichs des Bauteils beurteilbar ist. Beispielhafte Oberflächenmodifizierungsverfahren können sein: Fügeverfahren wie Lötverfahren, insbesondere Laserstrahllötverfahren, Schweißverfahren, insbesondere Laserstrahlschweißverfahren, Klebeverfahren oder Oberflächenbehandlungsverfahren wie Beschichtungsverfahren, 3D-Druck-Verfahren, Plasmabehandlungsverfahren, Reinigungsverfahren etc.

In einem ersten Verfahrensschritt wird eine Bildfolge eines zu beurteilenden Oberflächenbereichs des Bauteils bereitgestellt. Beispielsweise kann die Bildfolge von einem Speichermedium abgerufen werden oder direkt von einer die Bildfolge aufzeichnenden Kamera übertragen werden. Eine direkte Übertragung ermöglicht vorteilhaft eine Echtzeitbeurteilung des Auftretens von Defekten und folglich einen zeitnahen Eingriff bei der Detektion defekter Bauteile oder einer defekten Oberflächenmodifizierungseinrichtung, so dass eine hohe Ausschussrate vermieden werden kann.

Die Bildfolge umfasst mehrere Einzelbilder. Jedes Einzelbild zeigt dabei einen Bildausschnitt des Oberflächenbereichs. Die Bildausschnitte der Einzelbilder überlappen sich dabei zumindest teilweise. Dies bedeutet, dass ein Bildausschnitt der Einzelbilder derart gewählt ist, dass ein Oberflächenpunkt des Oberflächenbereichs in mindestens zwei, vorzugsweise mehr als zwei, beispielsweise vier, direkt aufeinanderfolgenden Einzelbildern abgebildet ist. Der Bildausschnitt kann dabei durch Bewegung des Bauteils und/oder der die Bildfolge aufnehmenden Kamera verändert worden sein.

In einem weiteren Verfahrensschritt werden die Einzelbilder zu mindestens zwei Bildklassen zugeordnet. Mindestens eine der Bildklassen trägt das Attribut "defekt". Diese Bildklasse wird auch als "Defekt-Bildklasse" bezeichnet. Mit anderen Worten werden mehrere, vorzugsweise alle, Einzelbilder klassifiziert und einer Bildklasse, also entweder der Defekt-Bildklasse oder der Nicht-Defekt-Bildklasse zugeordnet. Optional können weitere Bildklassen gebildet werden, z. B. nach Art oder Größe des Defekts, um eine genauere Charakterisierung eines Oberflächendefekts zu ermöglichen. Beispielsweise kann eine Unterscheidung nach Art des Defekts erfolgen, z. B. Pore, Spritzer etc.

Das Zuordnen der Bilder zu den Bildklassen kann beispielsweise anhand eines Klassifikationsmodells oder eines Regressionsmodells erfolgen. Laut Enzyklopädie der Wirtschaftsinformatik - Online-Lexikon; Heraus. Norbert Gronau, Jörg Becker, Natalia Kliewer, Jan Marco Leimeister, Sven Overhage http://www.enzyklopaedie-der-wirtschaftsinformatik.de, Stand: 08.07.2020, ist ein Klassifikationsmodell eine Abbildung, die die Zuordnung von Datenobjekten, vorliegend den Einzelbildern, zu vorgegebenen Klassen, vorliegend den Bildklassen, beschreibt. Hierbei ergibt sich die Klassenausprägung der diskreten Klassifikationsvariablen aus den Ausprägungen der Attribute der Datenobjekte. Die Grundlage für ein Klassifikationsmodell bildet ein Datenbestand, dessen Datenobjekte jeweils einer vorgegebenen Klasse zugeordnet sind. Das erstellte Klassifikationsmodell kann dann zur Prognose der Klassenzugehörigkeit von Datenobjekten eingesetzt werden, deren Klassenzugehörigkeit bisher nicht bekannt ist.

Mit einem Regressionsmodell wird eine abhängige, stetige Variable durch mehrere unabhängige Variablen erklärt. Es kann somit ebenfalls zur Prognose des unbekannten Wertes der abhängigen Variablen durch die Ausprägungen der zugehörigen unabhängigen Variablen eingesetzt werden. Der Unterschied zu einem Klassifikationsmodells liegt in der Kardinalität der abhängigen Variablen. Bei einem Klassifikationsmodell liegt eine diskrete, bei einem Regressionsmodell eine stetige Variable vor.

Nachdem die Einzelbilder den Bildklassen zugeordnet wurden, wird in einem weiteren Verfahrensschritt geprüft, ob mehrere einer vorgebbaren Anzahl direkt aufeinander folgender Einzelbilder der Defekt-Bildklasse zugeordnet wurden. Hierbei kann sowohl die Anzahl der genutzten direkt aufeinander folgenden Einzelbilder als auch die Anzahl der der Defekt-Bildklasse mindestens zugeordneten Einzelbilder je nach konkreten Anwendungsfall, also z. B. in Abhängigkeit des genutzten Oberflächenmodifizierungsverfahrens, der genutzten Messtechnik, der geforderten Oberflächengüte etc., festgelegt werden.

Beispielsweise kann festgelegt werden, dass geprüft wird, ob alle Einzelbilder der vorgebbaren Anzahl direkt aufeinander folgender Einzelbilder, also z. B. zwei Einzelbilder von zwei direkt aufeinander folgenden Einzelbildern, der Defekt-Klasse zugeordnet wurden. Alternativ kann z. B. festgelegt werden, dass geprüft wird, ob zwei, drei oder vier Einzelbilder von vier direkt aufeinander folgenden Einzelbildern der Defekt-Klasse zugeordnet wurden etc. Mit anderen Worten ist die Anzahl der zu prüfenden Einzelbilder kleiner oder gleich der vorgebbaren bzw. vorgegebenen Anzahl an direkt aufeinander folgenden Einzelbildern.

In einem weiteren Verfahrensschritt wird ein Defektsignal ausgegeben, falls mehrere Einzelbilder der vorgebbaren Anzahl in der Bildfolge direkt aufeinander folgender Einzelbilder der Defekt-Bildklasse zugeordnet wurden. Das Defektsignal kann dann beispielsweise genutzt werden, um eine Unterbrechung des Oberflächenmodifizierungsverfahrens oder die Ausgabe eines Hinweises an einen Bediener der das Oberflächenmodifizierungsverfahren ausführenden Oberflächenmodifizierungseinrichtung zu bewirken.

Indem das Auftreten eines Oberflächendefekts nicht nur anhand eines als defekt klassifizierten Einzelbilds ermittelt wird, sondern auf der Klassifizierung mehrerer Einzelbilder einer vorgebbaren Anzahl direkt aufeinander folgender Einzelbilder beruht, kann die Genauigkeit der Defektvorhersage deutlich verbessert werden. Insbesondere können falsch-positive und falsch-negative Ergebnisse, also fälschlicherweise als defekt oder fälschlicherweise als nicht-defekt beurteilte Oberflächenbereiche, verringert oder sogar gänzlich vermieden werden, da eine Verifizierung der Beurteilung eines auf einem als defekt klassifizierten Einzelbild beruhenden Oberflächenbereichs anhand eines unmittelbar darauf folgenden Einzelbilds erfolgt.

Gemäß verschiedenen Ausführungsvarianten kann das Verfahren ein Bereitstellen eines trainierten neuronalen Netzes aufweisen, wobei das Zuordnen der Einzelbilder zu den Bildklassen mittels des trainierten neuronalen Netzes erfolgt.

Beispielsweise kann das vorstehend erläuterte Klassifikationsmodell oder das vorstehend erläuterte Regressionsmodell in Form eines neuronalen Netzes implementiert sein.

Ein neuronales Netz stellt einen Rahmen für verschiedene Algorithmen zum maschinellen Lernen, zum Zusammenarbeiten und für die Verarbeitung komplexer Dateneingaben zur Verfügung. Solche neuronalen Netze lernen, Aufgaben anhand von Beispielen auszuführen, ohne typischerweise mit aufgabenspezifischen Regeln programmiert worden zu sein.

Ein neuronales Netz basiert auf einer Sammlung verbundener Einheiten oder Knoten, die als künstliche Neurone bezeichnet werden. Jede Verbindung kann ein Signal von einem künstlichen Neuron zu einem anderen übertragen. Ein künstliches Neuron, das ein Signal empfängt, kann es verarbeiten und dann weitere damit verbundene künstliche Neuronen aktivieren.

Bei herkömmlichen Implementierungen von neuronalen Netzen ist das Signal an einer Verbindung künstlicher Neuronen eine reelle Zahl, und der Ausgang eines künstlichen Neurons wird durch eine nichtlineare Funktion der Summe seiner Eingänge berechnet. Die Verbindungen der künstlichen Neurone haben typischerweise ein Gewicht, das sich mit fortschreitendem Lernen anpasst. Das Gewicht erhöht oder verringert die Stärke des Signals an einer Verbindung. Künstliche Neuronen können eine Schwelle aufweisen, so dass ein Signal nur dann ausgegeben wird, wenn das Gesamtsignal diese Schwelle überschreitet.

Typischerweise wird eine Vielzahl von künstlichen Neuronen in Schichten zusammengefasst. Unterschiedliche Schichten führen möglicherweise unterschiedliche Arten von Transformationen für ihre Eingaben durch. Signale wandern von der ersten Schicht, der Eingabeschicht, zur letzten Schicht, der Ausgabeschicht, möglicherweise nach mehrmaligem Durchlaufen der Schichten.

Die Architektur eines künstlichen neuronalen Netzes kann einem Multi-Layer-Perceptron-Netz entsprechen. Ein Multi-Layer-Perceptron-Netz gehört zur Familie der künstlichen feed-forward neuronalen Netze. Grundsätzlich bestehen Multi-Layer-Perceptron-Netze aus mindestens drei Schichten von Neuronen: einer Eingabeschicht, einer Zwischenschicht, auch als versteckte Schicht oder hidden layer bezeichnet, und einer Ausgabeschicht. Das bedeutet, dass alle Neuronen des Netzes in Schichten eingeteilt sind, wobei ein Neuron einer Schicht immer mit allen Neuronen der nächsten Schicht verbunden ist. Es gibt keine Verbindungen zur vorherigen Schicht und keine Verbindungen, die eine Schicht überspringen. Bis auf die Eingabeschicht bestehen die unterschiedlichen Schichten aus Neuronen, die einer nichtlinearen Aktivierungsfunktion unterliegen, und mit den Neuronen der nächsten Schicht verbunden sind. Ein tiefes neuronales Netz kann viele solcher Zwischenschichten aufweisen.

Trainieren eines künstlichen neuronalen Netzes bedeutet, die Gewichte der Neuronen und ggf. Schwellwerte geeignet anzupassen. Grundsätzlich sind drei verschiedene Lernformen zu unterscheiden: überwachtes Lernen, unüberwachtes Lernen und bestärkendes Lernen (engl. Supervised, Unsupervised und Reinforcement Learning).

Beim überwachten Lernen werden dem neuronalen Netz sehr viele Trainingsdatensätze präsentiert, die das neuronale Netz durchlaufen. Das gewünschte Ergebnis ist dabei für jeden Trainingsdatensatz bekannt, so dass eine Abweichung zwischen dem tatsächlichen und dem gewünschten Ergebnis ermittelt werden kann. Diese Abweichung lässt sich als Fehlerfunktion ausdrücken, deren Minimierung das Ziel des Trainings ist. Nach Abschluss des Trainings ist das trainierte Netzwerk in der Lage, auch auf unbekannte Datensätze die gewünschte Reaktion zu zeigen. Folglich ist das trainierte neuronale Netz in der Lage, eine Transferleistung zu erbringen bzw. zu generalisieren.

Beim unüberwachten Lernen ist hingegen kein konkretes gewünschtes Ergebnis bekannt. Vielmehr versucht das neuronale Netz selbständig, Ähnlichkeiten in den Datensätzen zu erkennen und darauf basierend Kategorien zu erstellen und weitere Datensätze entsprechend zuzuordnen.

Wie beim unüberwachten Lernen ist auch beim bestärkenden Lernen kein konkretes gewünschtes Ergebnis bekannt. Es existiert jedoch zumindest eine Bewertungsfunktion, mit der beurteilt wird, ob und ggf. in welchem Ausmaß ein erhaltenes Ergebnis gut oder schlecht war. Das neuronale Netz ist nun bestrebt, diese Funktion zu maximieren.

Das zum Zuordnen der Einzelbilder zu den Bildklassen genutzte trainierte neuronale Netz kann mittels einer der vorstehend beschriebenen Methoden trainiert worden sein. Als Trainingsdatensätze können beispielsweise Bilder von Oberflächenbereichen eines Bauteils genutzt worden sein, bei denen bekannt ist, ob sie einen Defekt zeigen oder nicht und die entsprechend der Defekt-Bildklasse oder Nicht-Defekt-Bildklasse zugeordnet worden sind. Werden weitere Bildklassen genutzt, können als Trainingsdatensätze entsprechend dieser weiteren Bildklassen klassifizierte Bilder genutzt worden sein.

Das Zuordnen der Einzelbilder zu den Bildklassen mittels des trainierten neuronalen Netzes hat den Vorteil, dass die Einzelbilder mit einer hoher Genauigkeit der jeweiligen Bildklasse zugeordnet werden können und folglich weniger falsch-positive oder falsch-negative Zuordnungen erhalten werden. Insgesamt kann somit die Genauigkeit der Vorhersage von Oberflächendefekten weiter verbessert werden.

Bevorzugt kann das trainierte neuronale Netz mittels Transferlernens (engl. transfer learning) trainiert worden sein. Transferlernen nutzt ein bereits vortrainiertes neuronales Netz und schult dieses für einen speziellen Anwendungszweck. Mit anderen Worten ist das vortrainierte neuronale Netz bereits mittels Trainingsdatensätzen trainiert worden und enthält folglich die Gewichte und Schwellwerte, die die Merkmale dieser Trainingsdatensätze repräsentieren.

Der Vorteil eines vortrainierten neuronalen Netzes ist, dass gelernte Merkmale auf andere Klassifizierungsprobleme übertragbar sind. Beispielsweise kann ein neuronales Netz, das mittels sehr vieler einfach verfügbarer Trainingsdatensätze mit Vogelbildern trainiert wurde, gelernte Merkmale wie Kanten oder horizontale Linien enthalten, die auf ein anderes Klassifizierungsproblem, das zwar keine Vögel betrifft, jedoch Bilder mit Kanten und horizontalen Linien, übertragbar sind. Zum Erhalt eines für das eigentliche Klassifizierungsproblem geeignet trainierten neuronalen Netzes sind anschließend vergleichsweise wenige weitere Trainingsdatensätze erforderlich, die das eigentliche Klassifizierungsproblem, also z. B. die vorliegend beschriebene Defekterkennung, betreffen.

Vorteilhaft wird also nur eine geringe Anzahl von für das Klassifizierungsproblem spezifischen Trainingsdatensätzen benötigt, um ein geeignet trainiertes neuronales Netz zu erhalten. Die erforderlichen spezifischen Trainingsdatensätze können folglich schneller erhalten werden, so dass eine Klassifizierung bereits nach kurzer Zeit möglich ist. Zudem können auch Klassifizierungsprobleme gelöst werden, für die nicht genügend spezifische Trainingsdatensätze zur Verfügung stehen, um ein neuronales Netz mit ausschließlich spezifischen Trainingsdatensätzen trainieren zu können. Die Verwendung eines vortrainierten neuronalen Netzes als Ausgangspunkt für das weitere Training mit spezifischen Trainingsdatensätzen hat außerdem den Vorteil, dass weniger Rechenleistung benötigt wird.

Das trainierte neuronale Netz kann sich von dem vortrainierten neuronalen Netz beispielsweise dadurch unterscheiden, dass weitere Schichten, z. B. Klassifikationsschichten hinzugefügt worden sind.

Als vortrainiertes neuronales Netz kann beispielsweise das unter der Bezeichnung ResNet50 eingangs erwähnte neuronale Netz genutzt werden. Neben ResNet50 kann beispielsweise auch ResNet18 genutzt werden.

Zur weiteren Verbesserung der Vorhersagegenauigkeit können Verfahren wie z. B. Data Augmentation, Weichzeichnen (engl. gaussian blur) und andere Techniken des maschinellen Lernens eingesetzt werden. Daneben kann das trainierte neuronale Netz auch mit denjenigen Einzelbildern weitertrainiert werden, die im Rahmen des vorgeschlagenen Verfahrens aufgenommen wurden.

Gemäß weiteren Ausführungsvarianten kann das trainierte neuronale Netz mittels iterativen Lernens trainiert worden sein.

Dies bedeutet, dass das neuronale Netz initial mit einem kleinen Trainingsdatensatz trainiert werden kann (erste Iterationsschleife). Mit diesem noch nicht perfekt trainierten neuronalen Netz lassen sich bereits erste Einzelbilder der Defekt-Bildklasse zuordnen. Diese können zum Trainingsdatensatz hinzugefügt werden, so dass in einer zweiten Iterationsschleife die Genauigkeit verbessert werden kann. Weitere Iterationsschleifen können entsprechend folgen.

Vorteilhaft kann mittels des iterativen Lernens die Genauigkeit erhöht werden. Auf Basis der ersten Iterationsschleife lässt sich zudem die Datengenerierung für weitere Trainingszyklen deutlich beschleunigen.

Gemäß weiteren Ausführungsvarianten kann das Verfahren als weiteren Verfahrensschritt, der vor dem Bereitstellen der Bildfolge ausgeführt wird, ein Aufnehmen der mehrere Einzelbilder aufweisenden Bildfolge des zu beurteilenden Oberflächenbereichs aufweisen, wobei jedes Einzelbild einen Bildausschnitt des Oberflächenbereichs zeigt und sich die Bildausschnitte der Einzelbilder zumindest teilweise überlappen.

Mit anderen Worten wird der Bildausschnitt derart gewählt, dass ein Oberflächenpunkt des Oberflächenbereichs in mehreren direkt aufeinanderfolgenden Einzelbildern abgebildet wird. Die aufgenommenen Bilder können dann im nächsten Verfahrensschritt für die darauffolgenden Verfahrensschritte bereitgestellt werden, so dass auf die obigen Ausführungen zu der bereitgestellten Bildfolge verwiesen wird. Vorzugsweise kann die Bildfolge mit einer Bildrate von mindestens 100 Bildern pro Sekunde (engl. frames per second) aufgezeichnet werden. Eine solche Bildrate erweist sich für viele Oberflächenmodifizierungsverfahren, insbesondere Löt- und Schweißverfahren als vorteilhaft, da bei Befestigung der Kamera zur Aufnahme der Bildfolge an der Oberflächenmodifizierungseinrichtung einerseits ein ausreichend großer Überlappungsbereich erreicht werden kann, so dass potentielle Defekte auf mehreren Einzelbildern der vorgebbaren Anzahl an direkt aufeinander folgenden Einzelbildern, z. B. auf zwei oder vorzugsweise mehr als zwei direkt aufeinanderfolgenden Einzelbildern, erkannt werden können. Andererseits muss die Bildrate nicht deutlich größer als 100 Bilder pro Sekunde sein, sodass die Aufnahme der Bilder und die Echtzeitauswertung mit üblicher Rechentechnik und damit kostengünstig erfolgen können. Auch eine kleinere Bildrate als 100 Bilder pro Sekunde kann ausreichend sein, falls die Vorschubbewegung des Bearbeitungsprozesses langsamer ist und Defekte auch mit einer geringeren Bildrate in der Bildfolge abgebildet werden können.

Neben der Bildrate können auch weitere Parameter die benötigte Rechenleistung beeinflussen, u. a. Bildauflösung (x,y), Farbinformationen (z. B. RGB oder SW), Farbtiefe (z. B. 8, 10 oder 12 bit pro Kanal), Zuordnen der Einzelbilder zu den Bildklassen mittels Single Precision oder Double Precision etc. Für die benötigten Ressourcen auf der eingesetzten Hardware ist zudem die Größe des genutzten Modells, z. B. des trainierten neuronalen Netzes, entscheidend.

Gemäß weiteren Ausführungsvarianten kann der Bildausschnitt zusammen mit einer Oberflächenmodifizierungseinrichtung zur Durchführung des Oberflächenmodifizierungsverfahrens bewegt werden.

Beispielsweise kann es sich bei dem Oberflächenmodifizierungsverfahren um ein kontinuierliches Verfahren handeln, bei dem der Bildausschnitt mit fortschreitender Oberflächenmodifizierung verschoben wird. Damit kann erreicht werden, dass stets der aktuell bearbeitete Oberflächenbereich von der Kamera erfasst wird, so dass neu auftretende Oberflächendefekte schnell ermittelt werden können.

Bei einem Laserstrahlverfahren, z. B. einem Laserstrahllötverfahren oder ein Laserstrahlschweißverfahren, kann beispielsweise eine Kamera genutzt werden, die koaxial zum Bearbeitungslaser ausgerichtet ist und folglich durch den Bearbeitungslaser hindurch blickt. Die Kamera bewegt sich folglich zusammen mit dem Bearbeitungslaser. Als Bildausschnitt kann bei einem Laserlötverfahren z. B. der Bereich Teil des Lötdrahtes - Prozesszone - erstarrte Lötverbindung gewählt werden, der zusammen mit dem Bearbeitungslaser über die Oberfläche des Bauteils wandert.

Eine derartige Verknüpfung der Kamera mit der Oberflächenmodifizierungseinrichtung hat den Vorteil, dass die Kamera automatisch bewegt wird und sich der Bildausschnitt folglich ebenfalls automatisch ändert, ohne dass eine separate Kamerasteuerung benötigt wird.

Gemäß weiteren Ausführungsvarianten kann das Verfahren in Echtzeit während des Oberflächenmodifizierungsverfahrens durchgeführt werden.

Dies ermöglicht vorteilhaft eine schnelle Ermittlung auftretender Oberflächendefekte. Folglich kann bei einem ermittelten Oberflächendefekt schnell eingegriffen werden, so dass ein defektes Bauteil entfernt werden kann und ggf. weitere Oberflächendefekte vermieden werden können.

Ein weiterer Aspekt der Erfindung betrifft eine Vorrichtung zum Ermitteln von während einer Durchführung eines Oberflächenmodifizierungsverfahrens eines Oberflächenbereichs eines Bauteils auftretenden Defekten, aufweisend eine Datenverarbeitungseinheit, die dazu ausgebildet und eingerichtet ist, Einzelbilder einer mehrere Einzelbilder aufweisenden Bildfolge eines zu beurteilenden Oberflächenbereichs zu mindestens zwei Bildklassen zuzuordnen, wobei jedes Einzelbild einen Bildausschnitt des Oberflächenbereichs zeigt und sich die Bildausschnitte der Einzelbilder zumindest teilweise überlappen und wobei mindestens eine Bildklasse das Attribut defekt trägt, im Folgenden als Defekt-Bildklasse bezeichnet, zu prüfen, ob mehrere Einzelbilder einer vorgebbaren Anzahl in der Bildfolge direkt aufeinander folgender Einzelbilder der Defekt-Bildklasse zugeordnet wurden, und falls mehrere Einzelbilder der vorgebbaren Anzahl direkt aufeinander folgender Einzelbilder der Bildfolge der Defekt-Bildklasse zugeordnet wurden, ein Defektsignal auszugeben.

Die Datenverarbeitungseinheit kann in einer signaltechnischen Wirkverbindung mit einer Speichereinheit, einer Kameraeinheit und/oder einer Ausgabeeinheit stehen und folglich Signale dieser Einheiten Empfangen und/oder Signale an diese Einheiten übertragen.

Die Vorrichtung kann beispielsweise zur Durchführung eines der vorstehend beschriebenen Verfahren, also zur Ermittlung von Oberflächendefekten und/oder Gerätedefekten, genutzt werden. Mithin können auch mit der erfindungsgemäßen Vorrichtung die Vorteile des erfindungsgemäßen Verfahrens erreicht werden. Sämtliche Ausführungen bezüglich des erfindungsgemäßen Verfahrens lassen sich analog auf die erfindungsgemäße Vorrichtung übertragen.

Gemäß verschiedenen Ausführungsvarianten kann die Datenverarbeitungseinheit ein trainiertes neuronales Netz zum Zuordnen der Einzelbilder zu den mindestens zwei Bildklassen aufweisen. Auch diesbezüglich wird auf die vorstehenden Ausführungen zur Beschreibung des trainierten neuronalen Netzes und dessen Vorteile verwiesen.

Gemäß weiteren Ausführungsvarianten kann die Vorrichtung eine Kameraeinheit aufweisen, die dazu eingerichtet und ausgebildet ist, eine mehrere Einzelbilder aufweisende Bildfolge des zu beurteilenden Oberflächenbereichs aufzunehmen, wobei jedes Einzelbild einen Bildausschnitt des Oberflächenbereichs zeigt und sich die Bildausschnitte der Einzelbilder zumindest teilweise überlappen.

Mit anderen Worten ist ein Bildausschnitt der Einzelbilder derart wählbar, dass ein Oberflächenpunkt des Oberflächenbereichs in mehreren direkt aufeinanderfolgenden Einzelbildern abbildbar ist.

Bevorzugt kann es sich bei der Kamera um eine Hochgeschwindigkeitskamera mit einer Bildrate von mindestens 100 Bildern pro Sekunde handeln.

Gemäß weiteren Ausführungsvarianten kann die Vorrichtung eine Oberflächenmodifizierungseinrichtung, ausgebildet zur Oberflächenmodifizierung des Oberflächenbereichs des Bauteils. Bei der Oberflächenmodifizierungseinrichtung kann es sich beispielweise um eine Laserlöteinrichtung, eine Laserschweißeinrichtung, eine Klebeinrichtung, eine Beschichtungseinrichtung oder eine 3D-Druck-Einrichtung handeln.

Bevorzugt kann die Kamera direkt an der Oberflächenmodifizierungseinrichtung montiert sein, so dass sich die Kamera bei Bewegung der Oberflächenmodifizierungseinrichtung oder eines Teils der Oberflächenmodifizierungseinrichtung automatisch mit bewegt.

Ein weiterer Aspekt der Erfindung betrifft ein Computerprogramm zum Ermitteln von während der Durchführung eines Oberflächenmodifizierungsverfahrens eines Oberflächenbereichs eines Bauteils auftretenden Defekten, umfassend Befehle, die bei der Ausführung des Programms durch einen Computer diesen veranlassen Einzelbilder einer mehrere Einzelbilder aufweisenden Bildfolge eines zu beurteilenden Oberflächenbereichs zu mindestens zwei Bildklassen zuzuordnen, wobei jedes Einzelbild einen Bildausschnitt des Oberflächenbereichs zeigt und sich die Bildausschnitte der Einzelbilder zumindest teilweise überlappen und wobei mindestens eine Bildklasse das Attribut defekt trägt, im Folgenden als Defekt-Bildklasse bezeichnet, zu prüfen, ob mehrere Einzelbilder einer vorgebbaren Anzahl in der Bildfolge direkt aufeinander folgender Einzelbilder der Defekt-Bildklasse zugeordnet wurden, und falls mehrere Einzelbilder der vorgebbaren Anzahl direkt aufeinander folgender Einzelbilder der Bildfolge der Defekt-Bildklasse zugeordnet wurden, ein Defektsignal auszugeben.

Folglich kann das erfindungsgemäße Computerprogramm dazu genutzt werden, eines der vorstehend beschriebenen erfindungsgemäßen Verfahren auszuführen, also z. B. Oberflächendefekte und/oder Gerätedefekte zu ermitteln,, wenn das Computerprogramm auf einem Computer, einer Datenverarbeitungseinheit oder einer der angegebenen Vorrichtungen ausgeführt wird. Mithin werden auch mit dem erfindungsgemäßen Computerprogramm die Vorteile des erfindungsgemäßen Verfahrens erreicht. Sämtliche Ausführungen bezüglich des erfindungsgemäßen Verfahrens lassen sich analog auf das erfindungsgemäße Computerprogramm übertragen.

Unter einem Computerprogramm kann ein auf einem geeigneten Medium speicherbarer und/oder über ein geeignetes Medium abrufbarer Programmcode verstanden werden. Zum Speichern des Programmcodes kann jedes zum Speichern von Software geeignete Medium, beispielsweise ein in einem Steuergerät verbauter nichtflüchtiger Speicher, eine DVD, ein USB-Stick, eine Flashcard oder dergleichen, Verwendung finden. Das Abrufen des Programmcodes kann beispielsweise über das Internet oder ein Intranet erfolgen oder über ein anderes geeignetes drahtloses oder kabelgebundenes Netzwerk.

Die Erfindung stellt außerdem einen computerlesbaren Datenträger, auf dem das Computerprogramm gespeichert ist, sowie ein Datenträgersignal, das das Computerprogramm überträgt, bereit.

Weitere Vorteile der vorliegenden Erfindung sind aus den Abbildungen und der zugehörigen Beschreibung ersichtlich. Es zeigen:
- Figur 1: ein Ablaufschema eines beispielhaften Verfahrens;
- Figur 2: eine schematische Darstellung einer beispielhaften Vorrichtung;
- Figur 3: eine beispielhafte Bildfolge;
- Figur 4: eine weitere beispielhafte Bildfolge;
- Figur 5: eine weitere beispielhafte Bildfolge;
- Figur 6: eine weitere beispielhafte Bildfolge; und
- Figur 7: eine Darstellung zur Vorhersagegenauigkeit.

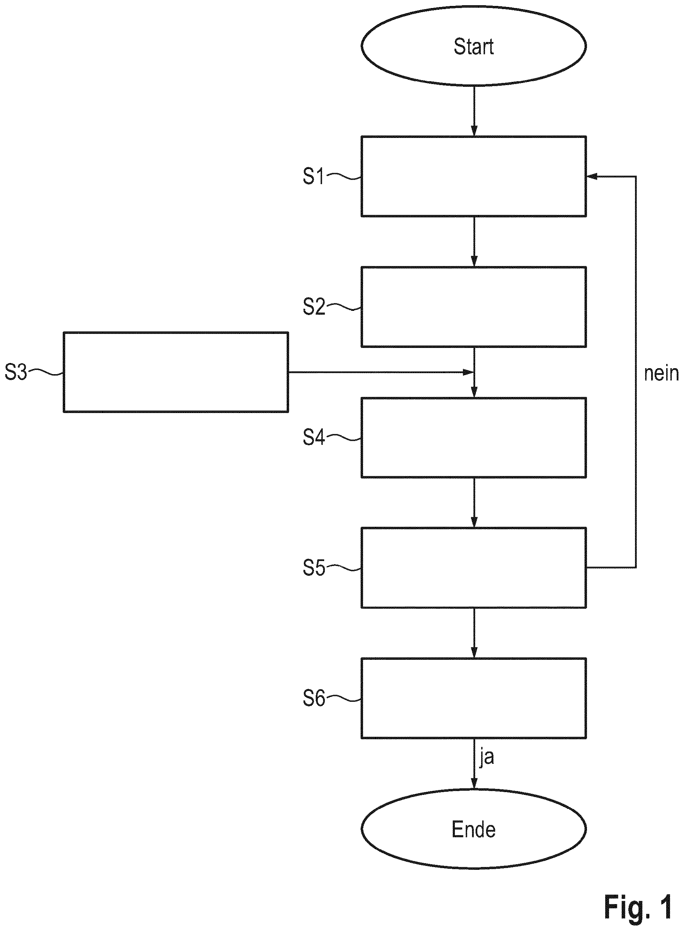

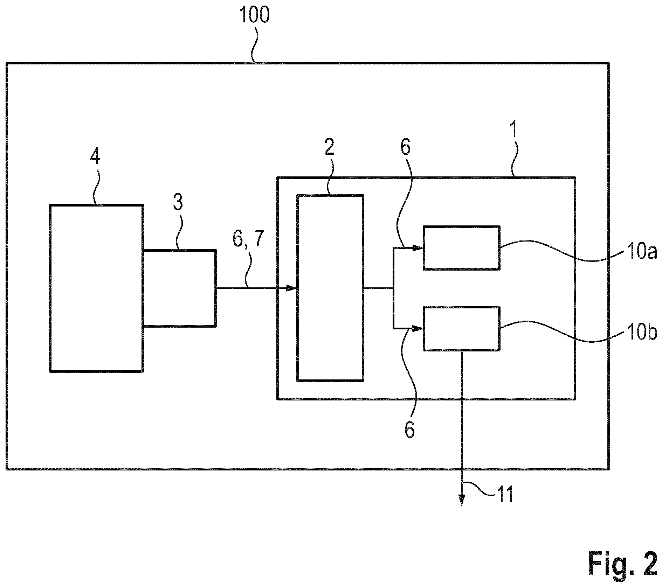

Die Erfindung wird nachfolgend unter Bezugnahme auf die Figuren 1 und 2 anhand eines Laserlötverfahrens und einer zugehörigen Vorrichtung 100 näher erläutert. Es werden folglich ein Verfahren und eine Vorrichtung 100 zum Ermitteln von während der Durchführung eines Laserlötverfahrens eines Oberflächenbereichs 8 eines Bauteils auftretenden Defekte 7 beschrieben. Konkret handelt es sich um ein Laserhartlöten zur Verbindung von Metallblechen, nämlich der Verbindung eines Dachs eines Personenkraftwagens mit der zugehörigen Seitenwand. Die Erfindung ist jedoch nicht auf dieses Verfahren beschränkt und kann analog für andere Oberflächenmodifizierungsverfahren eingesetzt werden.

Das Verfahren wird mittels der in Figur 2 schematisch dargestellten Vorrichtung 100 ausgeführt. Die Vorrichtung 100 weist eine Oberflächenmodifizierungseinrichtung 4 auf, bei der es sich im Ausführungsbeispiel um eine Laserlöteinrichtung handelt. Die Laserlöteinrichtung ist dazu ausgebildet, einen Laserstrahl zu erzeugen und in Richtung des zu behandelnden Oberflächenbereichs 8 auszusenden. Dem Oberflächenbereich 8 wird außerdem ein Lot, z. B. in Form eines Lötdrahts, zugeführt, das mittels des Laserstrahls aufgeschmolzen und zum Fügen des Fahrzeugdachs mit einem Seitenteil genutzt wird.

Die Vorrichtung 100 weist außerdem eine Kameraeinheit 3 auf. Im Ausführungsbeispiel wurde als Kameraeinheit 3 das Prozessbeobachtungssystem SCeye^{®} des Herstellers Scansonic genutzt. Die Kameraeinheit 3 ist als Koaxialkamera ausgebildet und verfügt über eine Laserbeleuchtungseinrichtung, wobei die Wellenlänge des Lasers der Laserbeleuchtungseinrichtung von der Wellenlänge des Bearbeitungslasers der Laserlöteinrichtung abweicht. Für das Ausführungsbeispiel wurde eine Wellenlänge von ca. 850 nm für die Laserbeleuchtungseinrichtung gewählt. Die Kameraeinheit 3 ist entsprechend sensitiv für diese Wellenlänge. Durch die Wellenlänge von ca. 850 nm werden Störeinflüsse durch Umgebungslicht und andere Lichtquellen weitgehend vermieden.

Die Kameraeinheit 3 ist bezüglich der Laserlöteinrichtung derart angeordnet, dass eine Bildfolge 5 in Form eines Videos durch den Bearbeitungslaserstrahl hindurch aufgenommen werden kann. Mit anderen Worten wird eine Bildfolge 5 aus mehreren Einzelbildern 6 des zu beurteilenden Oberflächenbereichs 8 aufgezeichnet. Der Bildausschnitt 9 ist dabei so gewählt, dass er sich vom Endbereich des Lötdrahts über die Prozesszone bis zur gerade erstarrten Lötverbindung erstreckt. Die Kameraeinheit 3 wird simultan mit dem Bearbeitungslaserstrahl bewegt, so dass sich der Bildausschnitt 9 über den Oberflächenbereich 8 entsprechend bewegt und sich die Bildausschnitte 9 der Einzelbilder 6 zumindest teilweise überlappen. Hierfür sind die Bildrate der Kameraeinheit 3 und die Geschwindigkeit, mit der der Bearbeitungslaser und die Kameraeinheit 3 bewegt werden, entsprechend aufeinander abgestimmt. Beispielsweise kann die Bildrate bei typischen Bearbeitungsgeschwindigkeiten 100 Bilder pro Sekunde betragen.

Wie bereits erwähnt, ist die Kameraeinheit 3 dazu eingerichtet und ausgebildet, eine Bildfolge 5 aus mehreren aufeinander folgenden Einzelbildern 6 des zu beurteilenden Oberflächenbereichs 8 aufzunehmen. Diese Bildfolge 5 wird an eine Datenverarbeitungseinheit 1 der Vorrichtung 100 übertragen. Mithin stehen die Kameraeinheit 3 und die Datenverarbeitungseinheit 1 in einer signaltechnischen Wirkverbindung.

Die Datenverarbeitungseinheit 1 dient der Verarbeitung der Einzelbilder 6 der Bildfolge 5. Hierfür weist die Datenverarbeitungseinheit 1 ein trainiertes neuronales Netz 2 auf, mit dessen Hilfe die Einzelbilder 6 zu zwei Bildklassen 10a, 10b zugeordnet werden. Hierbei werden als "ok" erkannte Einzelbilder 6 der ersten Bildklasse 10a und als "defekt" erkannte Einzelbilder 6 der Defekt-Bildklasse 10b zugeordnet.

Bei dem trainierten neuronalen Netz 2 handelt es sich im Ausführungsbeispiel um neuronales Netz, dass mittels Transferlernens trainiert worden ist. Das trainierte neuronale Netz 2 basiert auf dem vortrainierten neuronalen Netz mit der Bezeichnung "ResNet50", das bereits eingangs beschrieben wurde. Dieses vortrainierte neuronale Netz wurde mit 40 während eines Laserstrahllötens aufgenommenen Bildfolgen 5 weiter trainiert, wobei die Bildfolgen 5 insgesamt 400 Einzelbilder 6 enthielten, bei denen die Zuordnung zu den Bildklassen 10a, 10b festgelegt war. Durch diesen weiteren Trainingsprozess wurde ein trainiertes neuronales Netz 2 geschaffen, das in der Lage ist, Oberflächendefekte, wie z. B. Poren, Löcher, Spritzer, aber auch Gerätedefekte, wie z. B. ein defektes Schutzglas der Lötoptik, auf Einzelbildern 6 zu erkennen.

Die Datenverarbeitungseinheit 1 ist außerdem dazu ausgebildet und eingerichtet, zu prüfen ob mehrere Einzelbilder 6 einer vorgebbaren Anzahl in der Bildfolge 5 direkt aufeinander folgender Einzelbilder 6 der Defekt-Bildklasse 10b zugeordnet wurden. Im Ausführungsbeispiel wird geprüft, ob von vier in der Bildfolge 5 direkt aufeinander folgenden Einzelbildern 6 alle vier Einzelbilder 6 der Defekt-Bildklasse 10b zugeordnet wurden. Je nach erforderlicher Genauigkeit kann diese Vorgabe variiert werden. Falls vier von vier direkt aufeinander folgende Einzelbilder 6 der Defekt-Bildklasse 10b zugeordnet wurden, wird ein Defektsignal 11 ausgegeben. Mit der zuvor beschriebenen Vorrichtung 100 kann beispielsweise das nachfolgende unter Bezugnahme auf Figur 1 erläuterte Verfahren durchgeführt werden.

Mit dem Verfahren werden während der Durchführung des Laserlötverfahrens auftretende Defekte computerimplementiert ermittelt, wobei sowohl Oberflächendefekte als auch Gerätedefekte erkannt werden können. Nach dem Start des Verfahrens wird im Verfahrensschritt S1 eine Bildfolge 7 mit mehreren Einzelbildern 6 des zu beurteilenden Oberflächenbereichs 8 aufgenommen. Hierbei erfolgt die Aufnahme mit einer Bildrate von 100 Bildern pro Sekunde. Abweichende Bildraten sind möglich. Der Bildausschnitt 9 eines jeden Einzelbilds 6 wird so gewählt, dass sich die Bildausschnitte 9 der Einzelbilder 6 teilweise überlappen. Beispielsweise kann eine Überlappung von 80 % vorgesehen sein, d. h. in zwei direkt aufeinander folgenden Einzelbildern 6 ist der Bildausschnitt 9 zu 80 % gleich. Während der Aufnahme der Bildfolge 5 wird der Bildausschnitt 9 bzw. die den Bildausschnitt 9 abbildende Kameraeinheit 3 zusammen mit der Oberflächenmodifizierungseinrichtung 4 bewegt.

Im Verfahrensschritt S2 wird die Bildfolge 5 zur weiteren Verarbeitung bereitgestellt, z. B. von der Kameraeinheit 3 an die Datenverarbeitungseinheit 1 übertragen. Parallel dazu wird im Verfahrensschritt S3 das trainierte neuronale Netz 2 bereitgestellt.

Im Verfahrensschritt S4 werden die Einzelbilder 6 der Bildfolge 5 den zwei Bildklassen 10a, 10b mittels des trainierten neuronalen Netzes 2 zugeordnet, d. h. es wird entschieden, ob das zuzuordnende Einzelbild 6 einen Defekt zeigt oder nicht. Im ersten Fall erfolgt die Zuordnung zur Defekt-Bildklasse 10b, ansonsten zu der anderen Bildklasse 10a.

Im sich anschließenden Verfahrensschritt S5 wird geprüft, ob mehrere Einzelbilder einer vorgebbaren Anzahl in der Bildfolge 5 direkt aufeinander folgender Einzelbilder 6 der Defekt-Bildklasse 10b zugeordnet wurden. Wie bereits erwähnt, wird im Ausführungsbeispiel geprüft, ob von vier in der Bildfolge 5 direkt aufeinander folgenden Einzelbildern 6 alle vier Einzelbilder 6 der Defekt-Bildklasse 10b zugeordnet wurden.

Ist dies der Fall, geht das Verfahren weiter zu Verfahrensschritt S6, in dem ein Defektsignal 11 ausgegeben wird. Das Verfahren ist damit beendet. Wurden keine vier direkt aufeinander folgenden Einzelbilder 6 der Defekt-Bildklasse 10b zugeordnet, geht das Verfahren zurück zu Verfahrensschritt S1.

Selbstverständlich sind Abweichungen von diesem beispielhaften Verfahren möglich. So kann vorgesehen sein, dass das Verfahren mit dem Ausgeben des Defektsignals in Verfahrensschritt S6 nicht beendet wird, sondern auch danach zurück zu Verfahrensschritt S1 geht. Im Übrigen ist eine Ausführungsvariante bevorzugt, bei das Verfahren in Echtzeit während des Laserlötverfahrens durchgeführt, wobei sich die einzelnen Verfahrensschritte entsprechend zeitlich überschneiden. D. h. während die gerade aufgenommenen Einzelbilder 5 den Bildklassen 10a, 10b zugeordnet werden, werden weitere Einzelbilder 5 aufgenommen etc.

Indem die Beurteilung des Oberflächenbereichs 8 nicht lediglich anhand eines Einzelbilds 6 erfolgt, sondern aufeinanderfolgende Einzelbilder 6 als temporale Daten genutzt werden, kann beobachtet werden, ob ein vermeintlicher oder tatsächlicher Defekt 7 "durch das Kamerabild wandert". Nur wenn dies der Fall ist, der Defekt 7 also auf mehreren Einzelbildern 6 detektiert werden kann, wird von einem tatsächlichen Defekt 7 ausgegangen. Dadurch kann die Zuverlässigkeit der Defektvorhersage gegenüber einer herkömmlichen automatisierten Qualitätssicherung deutlich verbessert werden, da weniger falsch-positive und falsch-negative Defekte 7 ermittelt werden. Gegenüber einer visuellen Kontrolle hat das vorgeschlagene Verfahren neben einem verringerten personellen Aufwand und diesbezüglichen Kosteneinsparungen den Vorteil, dass auch kleine Defekte 7, die mit bloßem Auge nicht erkennbar sind, ermittelt werden können. Somit kann die Qualität der oberflächenbehandelten Bauteile insgesamt verbessert werden, da Bauteile mit geringer Qualität aussortiert werden können oder Verfahrensparameter und/oder Vorrichtungsteile derart geändert werden können, dass die ermittelten Defekte 7 nicht mehr auftreten.

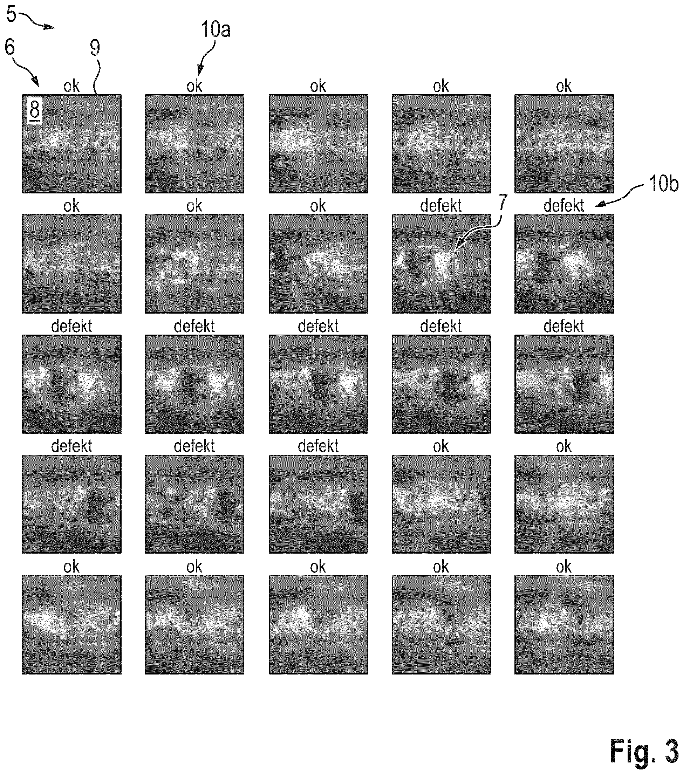

Figur 3 zeigt eine beispielhafte Bildfolge 5 eines zu beurteilenden Oberflächenbereichs 8 eines Bauteils, dessen Oberfläche mittels eines Laserlötverfahrens behandelt wird. Die Bildfolge 5 umfasst 25 Einzelbilder 6, deren Bildausschnitte 9 sich teilweise überlappen. Die Einzelbilder 6 wurden in der Reihenfolge von links oben nach rechts unten von der Kameraeinheit 3 aufgenommen und zur Auswertung an die Datenverarbeitungseinheit 1 der Vorrichtung 100 übermittelt.

Mittels des trainierten neuronalen Netzes 2 der Datenverarbeitungseinheit 1 wurden die Einzelbilder 6 jeweils einer Bildklasse 10a, 10b zugeordnet, in Figur 3 anhand der Klassifizierung als "ok" oder "defekt" ersichtlich. Hierbei wurden die ersten acht Einzelbilder 6 als "ok" klassifiziert und folglich der ersten Bildklasse 10a zugeordnet. Danach folgen zwölf Einzelbilder 6, die als "defekt" klassifiziert und folglich der Defekt-Bildklasse 10b zugeordnet wurden. Anschließen folgen sieben Einzelbilder 6, die wiederum als "ok" klassifiziert und der Bildklasse 10a zugeordnet wurden.

In den der Defekt-Bildklasse 10b zugeordneten Einzelbildern 6 ist eine Pore als Defekt 7 erkennbar. Dieser Defekt 7 wandert durch die Bewegung der Kameraeinheit 3 zusammen mit der Oberflächenbearbeitungseinrichtung 4 im Bildausschnitt 9 von links nach rechts.

Um den Defekt 7 mit hoher Wahrscheinlichkeit sicher detektieren zu können, wird z. B. geprüft, ob vier direkt aufeinanderfolgende Einzelbilder 6 der Defekt-Bildklasse 10b zugeordnet wurden. Dies ist bei der in Figur 3 gezeigten Bildfolge der Fall, da insgesamt 12 direkt aufeinander folgende Einzelbilder 6 der Defekt-Bildklasse 10b zugeordnet wurden. Folglich kann mit sehr hoher Wahrscheinlichkeit von einem tatsächlichen Vorliegen eines Defekts 7 ausgegangen werden und es wird ein Defektsignal 11 ausgegeben. Das Defektsignal 11 kann beispielsweise eine Unterbrechung des Oberflächenmodifizierungsverfahrens bewirken, um das fehlerhafte Bauteil aus dem Produktionsprozess entfernen zu können. Alternativ kann der Produktionsprozess auch weiter ablaufen und das betreffende Bauteil wird nach Abschluss seiner Oberflächenmodifizierung entfernt oder zur weiteren Kontrolle visuell begutachtet.

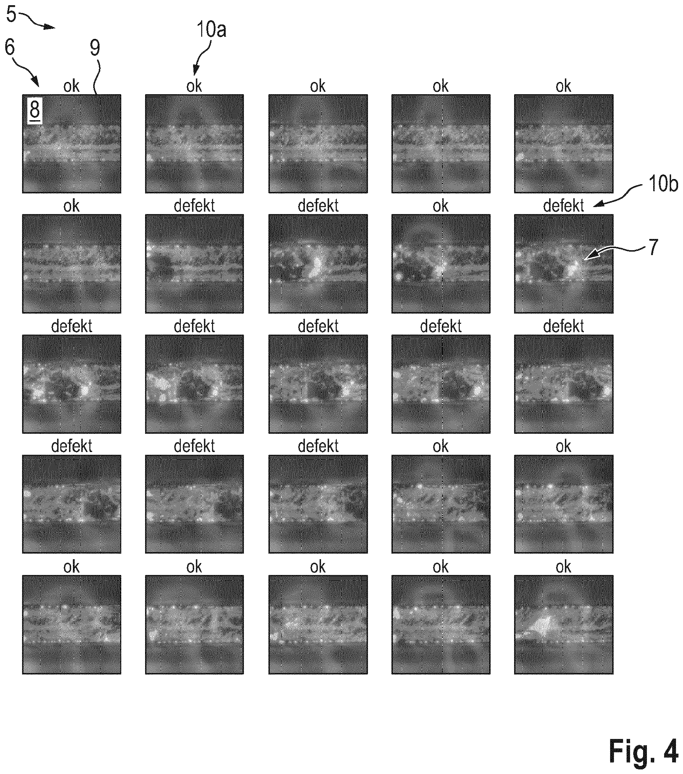

Figur 4 zeigt eine weitere beispielhafte Bildfolge 5 eines zu beurteilenden Oberflächenbereichs 8 eines Bauteils, dessen Oberfläche mittels eines Laserlötverfahrens behandelt wird. Die Bildfolge 5 umfasst wiederum 25 Einzelbilder 6, deren Bildausschnitte 9 sich teilweise überlappen. Die Einzelbilder 6 wurden wie in Figur 3 in der Reihenfolge von links oben nach rechts unten von der Kameraeinheit 3 aufgenommen und zur Auswertung an die Datenverarbeitungseinheit 1 der Vorrichtung 100 übermittelt.

Mittels des trainierten neuronalen Netzes 2 der Datenverarbeitungseinheit 1 wurden die Einzelbilder 6 jeweils einer Bildklasse 10a, 10b zugeordnet, in Figur 4 anhand der Klassifizierung als "ok" oder "defekt" ersichtlich. Hierbei wurden die ersten sechs Einzelbilder 6 als "ok" klassifiziert und folglich der ersten Bildklasse 10a zugeordnet, zwei Einzelbilder 6, die als "defekt" klassifiziert wurden, ein Einzelbild 6, das als "ok" klassifiziert wurde, neun Einzelbilder 6, die als "defekt" klassifiziert wurden und weitere sieben Einzelbilder 6, die als "ok" klassifiziert wurden. Mit anderen Worten wurden mit der Ausnahme von einem einzigen Einzelbild 6 zwölf direkt aufeinander folgende Einzelbilder 6 der Defekt-Bildklasse 10b zugeordnet.

In den der Defekt-Bildklasse 10b zugeordneten Einzelbildern 6 ist eine Pore als Defekt 7 erkennbar. Dieser Defekt 7 wandert durch die Bewegung der Kameraeinheit 3 zusammen mit der Oberflächenbearbeitungseinrichtung 4 im Bildausschnitt 9 von links nach rechts.

Um den Defekt 7 mit hoher Wahrscheinlichkeit sicher detektieren zu können, wird z. B. geprüft, ob vier direkt aufeinanderfolgende Einzelbilder 6 der Defekt-Bildklasse 10b zugeordnet wurden. Dies ist bei der in Figur 4 gezeigten Bildfolge der Fall, da insgesamt 9 direkt aufeinander folgende Einzelbilder 6, d. h. das 10. bis 18. Einzelbild 6, der Defekt-Bildklasse 10b zugeordnet wurden. Folglich kann mit sehr hoher Wahrscheinlichkeit von einem tatsächlichen Vorliegen eines Defekts 7 ausgegangen werden und es wird ein Defektsignal 11 ausgegeben.

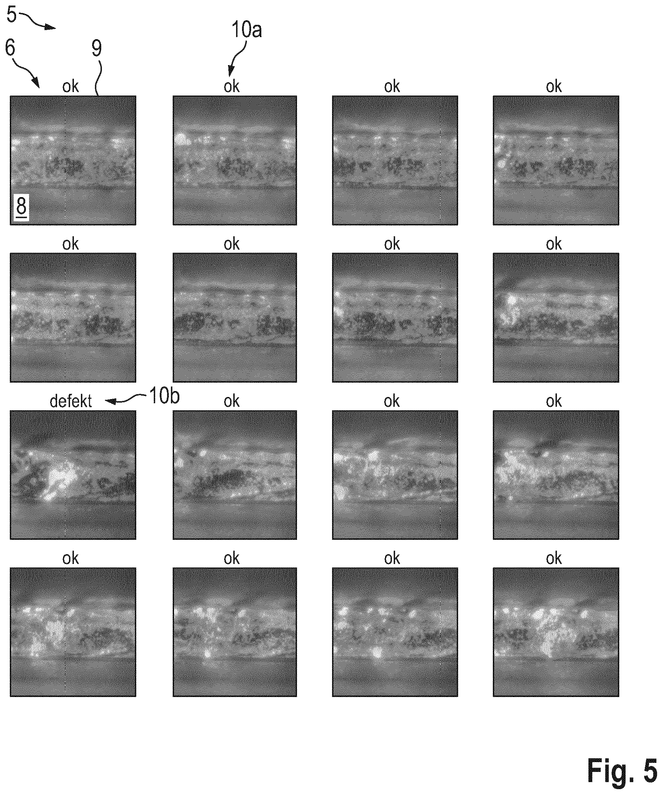

Figur 5 zeigt eine weitere beispielhafte Bildfolge 5 eines zu beurteilenden Oberflächenbereichs 8 eines Bauteils, dessen Oberfläche mittels eines Laserlötverfahrens behandelt wird. Die Bildfolge 5 umfasst 20 Einzelbilder 6, deren Bildausschnitte 9 sich teilweise überlappen. Die Einzelbilder 6 wurden wie in Figur 3 in der Reihenfolge von links oben nach rechts unten von der Kameraeinheit 3 aufgenommen und zur Auswertung an die Datenverarbeitungseinheit 1 der Vorrichtung 100 übermittelt.

Mittels des trainierten neuronalen Netzes 2 der Datenverarbeitungseinheit 1 wurden die Einzelbilder 6 jeweils einer Bildklasse 10a, 10b zugeordnet, in Figur 5 anhand der Klassifizierung als "ok" oder "defekt" ersichtlich. Hierbei wurden die ersten acht Einzelbilder 6 als "ok" klassifiziert und folglich der ersten Bildklasse 10a zugeordnet. Das neunte Einzelbild 6 wurde als "defekt" klassifiziert. Die weiteren Einzelbilder wurden wiederum als "ok" klassifiziert.

Allerdings handelt es sich bei dem als "defekt" klassifizierten Einzelbild 6 um eine falsche Klassifizierung, da dieses Einzelbild 6 tatsächlich nämlich keinen Defekt 7 zeigt. Würde nun lediglich jedes Einzelbild 6 unabhängig von den weiteren Einzelbildern 6 zur Defektvorhersage genutzt werden, würde bereits dieses falsch klassifizierte Einzelbild 6 das Ausgeben eines Defektsignals 11 auslösen und ggf. die Bauteilproduktion stoppen.

Da gemäß dem vorgeschlagenen Verfahren jedoch vorgesehen ist, zu prüfen, ob mehrere Einzelbilder 6 einer vorgebbaren Anzahl in der Bildfolge 5 direkt aufeinander folgender Einzelbilder 6 der Defekt-Bildklasse 10b zugeordnet wurden, wird bei Anwendung des vorgeschlagenen Verfahrens kein Defektsignal 11 ausgegeben, da lediglich ein einziges Einzelbild 6 der Defektbildklasse 10b zugeordnet wurde. Die Detektion von falsch-positiven Defekten 7 kann dadurch vermieden werden.

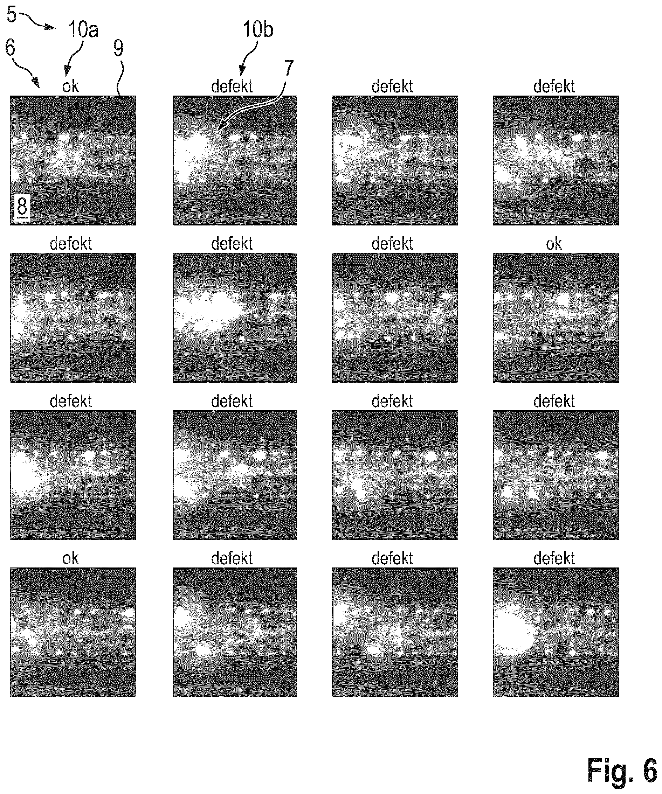

Figur 6 zeigt eine weitere beispielhafte Bildfolge 5 eines zu beurteilenden Oberflächenbereichs 8 eines Bauteils, dessen Oberfläche mittels eines Laserlötverfahrens behandelt wird. Die Bildfolge 5 umfasst wiederum 20 Einzelbilder 6, deren Bildausschnitte 9 sich teilweise überlappen. Die Einzelbilder 6 wurden wie in Figur 3 in der Reihenfolge von links oben nach rechts unten von der Kameraeinheit 3 aufgenommen und zur Auswertung an die Datenverarbeitungseinheit 1 der Vorrichtung 100 übermittelt.

Mittels des trainierten neuronalen Netzes 2 der Datenverarbeitungseinheit 1 wurden die Einzelbilder 6 jeweils einer Bildklasse 10a, 10b zugeordnet, in Figur 6 anhand der Klassifizierung als "ok" oder "defekt" ersichtlich. Hierbei wurde das erste Einzelbild 6 als "ok" klassifiziert und folglich der ersten Bildklasse 10a zugeordnet. Alle nachfolgenden Einzelbilder 6 wurden als "defekt" klassifiziert und der Defekt-Bildklasse 10b zugeordnet.

In den der Defekt-Bildklasse 10b zugeordneten Einzelbildern 6 ist eine Beschädigung des Schutzglases als Defekt 7 erkennbar. Dieser Defekt 7 wandert durch die Bewegung der Kameraeinheit 3 zusammen mit der Oberflächenbearbeitungseinrichtung 4 im Bildausschnitt 9 von links nach rechts.

Um den Defekt 7 mit hoher Wahrscheinlichkeit sicher detektieren zu können, wird z. B. geprüft, ob vier direkt aufeinanderfolgende Einzelbilder 6 der Defekt-Bildklasse 10b zugeordnet wurden. Dies ist bei der in Figur 6 gezeigten Bildfolge der Fall, da insgesamt 19 direkt aufeinanderfolgende Einzelbilder 6 der Defekt-Bildklasse 10b zugeordnet wurden. Folglich kann mit sehr hoher Wahrscheinlichkeit von einem tatsächlichen Vorliegen eines Defekts 7 ausgegangen werden und es wird ein Defektsignal 11 ausgegeben. Das vorgeschlagene Verfahren ist also auch zur Detektion von Defekten 7 der Oberflächenmodifizierungseinrichtung 4 geeignet.

Aufgrund des deutlich abweichenden Erscheinungsbilds des Defekts 7 in der Bildfolge 5 der Figur 6 (Glasdefekt) von den in den Figuren 3 und 4 gezeigten Defekten 7 (Poren) kann auch eine Unterscheidung der Defektart vorgenommen werden.

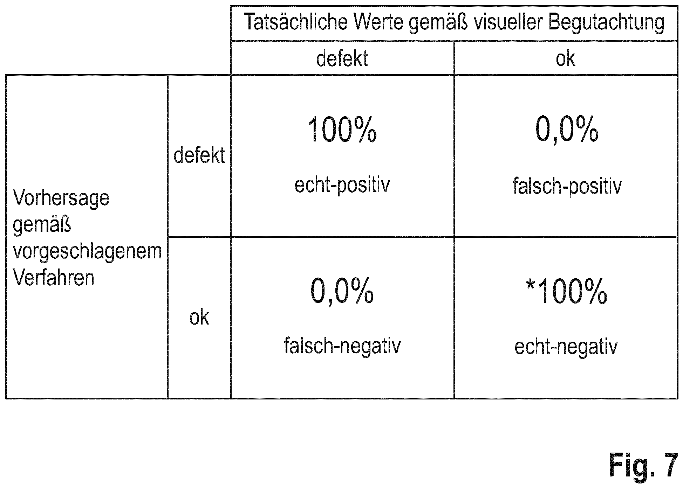

Figur 7 zeigt eine Darstellung zur Vorhersagegenauigkeit von Defekten 7 mittels des vorstehend beschriebenen Verfahrens im Vergleich zu einer visuellen Begutachtung, wie sie bisher üblich ist. Analysiert wurde der Oberflächenbereich 8 von 201 Bauteilen, d. h. 201 Bauteilen wurden mittels eines Laserlötverfahrens oberflächenbehandelt.

Aus der Darstellung ergibt sich, dass 100 % der mittels visueller Begutachtung als "defekt" erkannten Bauteile auch mittels des vorgeschlagenen Verfahrens als "defekt" erkannt wurden (Kategorie "echt-positiv"). Keines der mittels visueller Begutachtung als "ok" erkannten Bauteile wurde mittels des vorgeschlagenen Verfahrens als "defekt" erkannt (Kategorie "falsch-positiv"). Ebenso wurde keines der mittels visueller Begutachtung als "defekt" erkannten Bauteils mittels des vorgeschlagenen Verfahrens als "ok" erkannt (Kategorie "falsch-negativ"). Wiederum wurden 100 % der mittels visueller Begutachtung als "ok" erkannten Bauteile auch mittels des vorgeschlagenen Verfahrens als "ok" erkannt (Kategorie "echt-negativ"), wobei das Sternchen "*" in Figur 5 anzeigt, das ein tatsächlicher Defekt 7 korrekterweise mittels des vorgeschlagenen Verfahrens erkannt wurde, jedoch nicht im Rahmen der üblichen manuellen visuellen Begutachtung. Der Defekt 7 war so klein, dass er nach dem nachgelagerten Schleifprozess der Oberfläche nicht mehr sichtbar war. Eine anschließende manuelle Analyse des Prozessvideos zeigte, dass der Defekt 7 tatsächlich eine sehr kleine Pore war.

Erst durch weitere Untersuchungen konnte die Existenz des Defekts 7 bestätigt werden. Folglich kann geschlussfolgert werden, dass mittels des vorgeschlagenen Verfahrens die Genauigkeit der Beurteilung der Oberflächenqualität der bisher üblichen visuellen Begutachtung nicht nur erreicht, sondern sogar übertroffen werden kann, d. h. es werden auch Defekte 7 erkannt, die mittels üblicher visueller Begutachtung nicht erkennbar sind.

Zusammengefasst bietet die Erfindung folgende hauptsächliche Vorteile:
- Es können auch sehr kleine Defekte 7 erkannt werden, sodass eine visuelle Begutachtung des Oberflächenbereichs 8 des Bauteils nach der Durchführung des Oberflächenmodifizierungsverfahrens entbehrlich ist.
- Neben solchen Oberflächendefekten können auch Gerätedefekte erkannt werden. Wartungs- und Instandhaltungsmaßnahmen können rechtzeitig eingeleitet werden.
- Die Defekterkennung kann in Echtzeit erfolgen, d. h. eine nachgelagerte Qualitätskontrolle kann entbehrlich sein.
- Die Vorhersagegenauigkeit ist gegenüber bisherigen Verfahren deutlich besser, d. h. es gibt weniger falsch-positive oder falsch-negative Ergebnisse.

### Bezugszeichenliste

- 1: Datenverarbeitungseinheit
- 2: trainiertes neuronales Netz
- 3: Kameraeinheit
- 4: Oberflächenmodifizierungseinrichtung
- 5: Bildfolge
- 6: Einzelbild
- 7: Defekt
- 8: Oberflächenbereich
- 9: Bildausschnitt
- 10a, 10b: Bildklasse
- 11: Defektsignal

- 100: Vorrichtung

- S1: Aufnehmen einer mehrere Einzelbilder aufweisenden Bildfolge des zu beurteilenden Oberflächenbereichs, wobei jedes Einzelbild einen Bildausschnitt des Oberflächenbereichs zeigt und sich die Bildausschnitte der Einzelbilder zumindest teilweise überlappen
- S2: Bereitstellen der Bildfolge
- S3: Bereitstellen eines trainierten neuronalen Netzes
- S4: Zuordnen der Einzelbilder zu mindestens zwei Bildklassen, wovon mindestens eine Bildklasse das Attribut defekt trägt, mittels des trainierten neuronal Netzes
- S5: Prüfen, ob mehrere Einzelbilder einer vorgebbaren Anzahl in der Bildfolge direkt aufeinander folgender Einzelbilder der Defekt-Bildklasse zugeordnet wurden
- S6: Ausgeben eines Defektsignals

## Patentansprüche

1. Computerimplementiertes Verfahren zum Ermitteln von während einer Durchführung eines Oberflächenmodifizierungsverfahrens eines Oberflächenbereichs (8) eines Bauteils auftretenden Defekten (7), aufweisend:
- Bereitstellen einer mehrere Einzelbilder (6) aufweisenden Bildfolge (5) eines zu beurteilenden Oberflächenbereichs (8), wobei jedes Einzelbild (6) einen Bildausschnitt (9) des Oberflächenbereichs (8) zeigt und sich die Bildausschnitte (9) der Einzelbilder (6) zumindest teilweise überlappen (S2),
- Zuordnen der Einzelbilder (6) zu mindestens zwei Bildklassen (10a, 10b), wovon mindestens eine Bildklasse (10b) das Attribut defekt trägt, im Folgenden als Defekt-Bildklasse (10b) bezeichnet (S4),
gekenzeichnet durch:
- Prüfen, ob mehrere Einzelbilder (6) einer vorgebbaren Anzahl in der Bildfolge (5) direkt aufeinander folgender Einzelbilder (6) der Defekt-Bildklasse (10b) zugeordnet wurden (S5), und
- falls mehrere Einzelbilder (6) der vorgebbaren Anzahl direkt aufeinander folgender Einzelbilder (6) der Defekt-Bildklasse (10b) zugeordnet wurden, Ausgeben eines Defektsignals (11) (S6).

2. Verfahren nach Anspruch 1, aufweisend:
- Bereitstellen eines trainierten neuronalen Netzes (2) (S3),
wobei das Zuordnen der Einzelbilder (6) zu den Bildklassen (10a, 10b) mittels des trainierten neuronalen Netzes (2) erfolgt.

3. Verfahren nach Anspruch 2, wobei das trainierte neuronale Netz (2) mittels Transferlernens trainiert worden ist.

4. Verfahren Anspruch 2 oder 3, wobei das trainierte neuronale Netz (2) mittels iterativen Lernens trainiert worden ist.

5. Verfahren nach einem der vorstehenden Ansprüche, aufweisend:
- Aufnehmen der mehrere Einzelbilder (6) aufweisenden Bildfolge (5) des zu beurteilenden Oberflächenbereichs (8), wobei jedes Einzelbild (6) einen Bildausschnitt (9) des Oberflächenbereichs (8) zeigt und sich die Bildausschnitte (9) der Einzelbilder (6) zumindest teilweise überlappen (S1).

6. Verfahren nach Anspruch 5, wobei die Bildfolge (5) mit einer Bildrate von mindestens 100 Bildern pro Sekunde aufgezeichnet wird.

7. Verfahren nach einem der vorstehenden Ansprüche, wobei das Oberflächenmodifizierungsverfahren ein Lötverfahren, insbesondere ein Laserstrahlhartlötverfahren, ein Schweißverfahren, ein Klebeverfahren, ein Beschichtungsverfahren oder ein 3D-Druck-Verfahren ist.

8. Verfahren nach einem der vorstehenden Ansprüche, wobei der Bildausschnitt (9) zusammen mit einer Oberflächenmodifizierungseinrichtung (4) zur Durchführung des Oberflächenmodifizierungsverfahrens bewegt wird.

9. Verfahren nach einem der vorstehenden Ansprüche, wobei das Verfahren in Echtzeit während des Oberflächenmodifizierungsverfahrens durchgeführt wird.

10. Verfahren nach einem der vorstehenden Ansprüche, wobei Oberflächendefekte in dem Oberflächenbereich (8) des Bauteils und/oder Gerätedefekte einer Oberflächenmodifizierungseinrichtung (4) zur Durchführung des Oberflächenmodifizierungsverfahrens ermittelt werden.

11. Vorrichtung (100) zum Ermitteln von während einer Durchführung eines Oberflächenmodifizierungsverfahrens eines Oberflächenbereichs (8) eines Bauteils auftretenden Defekten (7), aufweisend eine Datenverarbeitungseinheit (1), die dazu ausgebildet und eingerichtet ist,
- Einzelbilder (6) einer mehrere Einzelbilder (6) aufweisenden Bildfolge (5) eines zu beurteilenden Oberflächenbereichs (8) zu mindestens zwei Bildklassen (10a, 10b) zuzuordnen, wobei jedes Einzelbild (6) einen Bildausschnitt (9) des Oberflächenbereichs (8) zeigt und sich die Bildausschnitte (9) der Einzelbilder (6) zumindest teilweise überlappen und wobei mindestens eine Bildklasse (10a, 10b) das Attribut defekt trägt, im Folgenden als Defekt-Bildklasse (10b) bezeichnet,
**gekennzeichnet dadurch, dass** die Datenverarbeitungseinheit dazu ausgebildet und eingerichtet ist,
- zu prüfen, ob mehrere Einzelbilder (6) einer vorgebbaren Anzahl in der Bildfolge (5) direkt aufeinander folgender Einzelbilder (6) der Defekt-Bildklasse (1 0b) zugeordnet wurden, und
- falls mehrere Einzelbilder (6) der vorgebbaren Anzahl direkt aufeinander folgender Einzelbilder (6) der Defekt-Bildklasse (10b) zugeordnet wurden, ein Defektsignal (11) auszugeben.

12. Vorrichtung (100) nach Anspruch 11, wobei die Datenverarbeitungseinheit (1) ein trainiertes neuronales Netz (2) zum Zuordnen der Einzelbilder (6) zu den mindestens zwei Bildklassen (10a, 10b) aufweist.

13. Vorrichtung (100) nach Anspruch 11 oder 12, aufweisend:
- eine Kameraeinheit (3), die dazu eingerichtet und ausgebildet ist, eine mehrere Einzelbilder (6) aufweisende Bildfolge (5) des zu beurteilenden Oberflächenbereichs (8) aufzunehmen, wobei jedes Einzelbild (6) einen Bildausschnitt (9) des Oberflächenbereichs (8) zeigt und sich die Bildausschnitte (9) der Einzelbilder (6) zumindest teilweise überlappen.

14. Vorrichtung (100) nach einem der Ansprüche 11 bis 13, aufweisend:
- eine Oberflächenmodifizierungseinrichtung (4), ausgebildet zur Oberflächenmodifizierung des Oberflächenbereichs (8) des Bauteils.

15. Computerprogramm zum Ermitteln von während der Durchführung eines Oberflächenmodifizierungsverfahrens eines Oberflächenbereichs (8) eines Bauteils auftretenden Defekten (7), umfassend Befehle, die bei der Ausführung des Programms durch einen Computer diesen veranlassen:
- Einzelbilder (6) einer mehrere Einzelbilder (6) aufweisenden Bildfolge (5) eines zu beurteilenden Oberflächenbereichs (8) zu mindestens zwei Bildklassen (10a, 10b) zuzuordnen, wobei jedes Einzelbild (6) einen Bildausschnitt (9) des Oberflächenbereichs (8) zeigt und sich die Bildausschnitte (8) der Einzelbilder (6) zumindest teilweise überlappen und wobei mindestens eine Bildklasse (10a, 10b) das Attribut defekt trägt, im Folgenden als Defekt-Bildklasse (10b) bezeichnet,
**gekennzeichnet durch** Befehle, die bei der Ausführung des Programms durch einen Computer diesen veranlassen:
- zu prüfen, ob mehrere Einzelbilder (6) einer vorgebbaren Anzahl in der Bildfolge (8) direkt aufeinander folgender Einzelbilder (6) der Defekt-Bildklasse (1 0b) zugeordnet wurden, und
- falls mehrere Einzelbilder (6) der vorgebbaren Anzahl direkt aufeinander folgender Einzelbilder (6) der Defekt-Bildklasse (10b) zugeordnet wurden, ein Defektsignal (11) auszugeben.

16. Computerlesbarer Datenträger oder Datenträgersignal, auf dem das Computerprogramm nach Anspruch 15 gespeichert ist bzw. welches das Computerprogramm nach Anspruch 15 überträgt.

## Claims

1. Computer-implemented method for determining defects (7) that occur during performance of a surface modification method of a surface region (8) of a component, comprising:
- providing an image sequence (5) of a surface region (8) to be assessed, said image sequence comprising a plurality of individual images (6), wherein each individual image (6) shows an image detail (9) of the surface region (8) and the image details (9) of the individual images (6) at least partly overlap (S2),
- assigning the individual images (6) to at least two image classes (10a, 10b), of which at least one image class (10b) bears the attribute defective, referred to hereinafter as defective image class (10b) (S4),
**characterized by**:
- checking whether a plurality of individual images (6) of a predefinable number of directly successive individual images (6) in the image sequence (5) have been assigned to the defective image class (10b) (S5), and
- if a plurality of individual images (6) of the predefinable number of directly successive individual images (6) have been assigned to the defective image class (10b), outputting a defect signal (11) (S6) .

2. Method according to Claim 1, comprising:
- providing a trained neural network (2) (S3), wherein assigning the individual images (6) to the image classes (10a, 10b) is carried out by means of the trained neural network (2).

3. Method according to Claim 2, wherein the trained neural network (2) was trained by means of transfer learning.

4. Method according to Claim 2 or 3, wherein the trained neural network (2) was trained by means of iterative learning.

5. Method according to any of the preceding claims, comprising:
- recording the image sequence (5) of the surface region (8) to be assessed, said image sequence comprising a plurality of individual images (6), wherein each individual image (6) shows an image detail (9) of the surface region (8) and the image details (9) of the individual images (6) at least partly overlap (S1).

6. Method according to Claim 5, wherein the image sequence (5) is captured with a frame rate of at least 100 frames per second.

7. Method according to any of the preceding claims, wherein the surface modification method is a soldering method, in particular a laser beam hard soldering method, a welding method, an adhesive bonding method, a coating method, or a 3D printing method.

8. Method according to any of the preceding claims, wherein the image detail (9) is moved together with a surface modification device (4) for performing the surface modification method.

9. Method according to any of the preceding claims, wherein the method is performed in real time during the surface modification method.

10. Method according to any of the preceding claims, which comprises determining surface defects in the surface region (8) of the component and/or equipment defects of a surface modification device (4) for performing the surface modification method.

11. Apparatus (100) for determining defects (7) that occur during performance of a surface modification method of a surface region (8) of a component, the apparatus comprising a data processing unit (1) designed and configured to:
- assign individual images (6) of an image sequence (5) of a surface region (8) to be assessed, said image sequence comprising a plurality of individual images (6), to at least two image classes (10a, 10b), wherein each individual image (6) shows an image detail (9) of the surface region (8) and the image details (9) of the individual images (6) at least partly overlap and wherein at least one image class (10a, 10b) bears the attribute defective, referred to hereinafter as defective image class (10b),
**characterized in that** the data processing unit is designed and configured to:
- check whether a plurality of individual images (6) of a predefinable number of directly successive individual images (6) in the image sequence (5) have been assigned to the defective image class (10b), and
- if a plurality of individual images (6) of the predefinable number of directly successive individual images (6) have been assigned to the defective image class (10b), output a defect signal (11) .

12. Apparatus (100) according to Claim 11, wherein the data processing unit (1) comprises a trained neural network (2) for assigning the individual images (6) to the at least two image classes (10a, 10b).

13. Apparatus (100) according to Claim 11 or 12, comprising:
- a camera unit (3) configured and designed to record an image sequence (5) of the surface region (8) to be assessed, said image sequence comprising a plurality of individual images (6), wherein each individual image (6) shows an image detail (9) of the surface region (8) and the image details (9) of the individual images (6) at least partly overlap.

14. Apparatus (100) according to any of Claims 11 to 13, comprising:
- a surface modification device (4), designed for the surface modification of the surface region (8) of the component.

15. Computer program for determining defects (7) that occur during the performance of a surface modification method of a surface region (8) of a component, the computer program comprising instructions which, when the program is executed by a computer, cause the latter to:
- assign individual images (6) of an image sequence (5) of a surface region (8) to be assessed, said image sequence comprising a plurality of individual images (6), to at least two image classes (10a, 10b), wherein each individual image (6) shows an image detail (9) of the surface region (8) and the image details (8) of the individual images (6) at least partly overlap and wherein at least one image class (10a, 10b) bears the attribute defective, referred to hereinafter as defective image class (10b),
**characterized by** instructions which, when the program is executed by a computer, cause the latter to:
- check whether a plurality of individual images (6) of a predefinable number of directly successive individual images (6) in the image sequence (8) have been assigned to the defective image class (10b), and
- if a plurality of individual images (6) of the predefinable number of directly successive individual images (6) have been assigned to the defective image class (10b), output a defect signal (11) .

16. Computer-readable data carrier or data carrier signal on which the computer program according to Claim 15 is stored or which transmits the computer program according to Claim 15.

## Revendications

1. Procédé informatisé de détermination de défauts (7) survenant lors de la mise en œuvre d'un procédé de modification de surface d'une zone de surface (8) d'un composant, ledit procédé informatisé comportant les étapes suivantes :
- fournir (S2) une séquence d'images (5), comportant une pluralité d'images individuelles (6), d'une zone de surface (8) à évaluer, chaque image individuelle (6) montrant une section d'image (9) de la zone de surface (8) et les sections d'image (9) des images individuelles (6) se chevauchant au moins partiellement,
- associer (S4) les images individuelles (6) à au moins deux classes d'images (10a, 10b) dont au moins une classe d'images (10b) porte l'attribut défaut, dénommée ci-après classe d'images avec défaut (10b), **caractérisé par** les étapes suivantes :
- vérifier (S5) si plusieurs images individuelles (6) d'un nombre spécifiable d'images individuelles (6) qui se suivent directement dans la séquence d'images (5) ont été associées à la classe d'images avec défaut (10b), et
- délivrer (S6) un signal de défaut (11) si plusieurs images individuelles (6) du nombre spécifiable d'images individuelles (6) qui se suivent directement ont été associées à la classe d'images avec défaut (10b).

2. Procédé selon la revendication 1, comportant l'étape suivante :
- fournir (S3) un réseau neuronal (2) ayant été soumis à un apprentissage,
l'association des images individuelles (6) aux classes d'images (10a, 10b) étant effectuée au moyen du réseau neuronal (2) ayant été soumis à un apprentissage.

3. Procédé selon la revendication 2, dans lequel le réseau neuronal (2) ayant été soumis à un apprentissage a été soumis à un apprentissage par transfert.

4. Procédé selon la revendication 2 ou 3, dans lequel le réseau neuronal (2) ayant été soumis à un apprentissage a été soumis à un apprentissage itératif.

5. Procédé selon l'une des revendications précédentes, comprenant l'étape suivante :
- enregistrer la séquence d'images (5), comportant une pluralité d'images individuelles (6), de la zone de surface (8) à évaluer, chaque image individuelle (6) montrant une section d'image (9) de la zone de surface (8) et les sections d'image (9) des images individuelles (6) se chevauchant au moins partiellement (S1).

6. Procédé selon la revendication 5, la séquence d'images (5) étant enregistrée à une fréquence d'images d'au moins 100 images par seconde.

7. Procédé selon l'une des revendications précédentes, le procédé de modification de surface étant un procédé de brasage, en particulier un procédé de brasage par faisceau laser, un procédé de soudage, un procédé de collage, un procédé de revêtement ou un procédé d'impression 3D.

8. Procédé selon l'une des revendications précédentes, la section d'image (9) étant déplacée conjointement avec un module de modification de surface (4) afin de mettre en œuvre le procédé de modification de surface.

9. Procédé selon l'une des revendications précédentes, le procédé étant mis en œuvre en temps réel pendant le procédé de modification de surface.

10. Procédé selon l'une des revendications précédentes, des défauts de surface dans la zone de surface (8) du composant et/ou des défauts d'appareil d'un module de modification de surface (4) étant déterminés pour la mise en œuvre du procédé de modification de surface.

11. Dispositif (100) de détermination de défauts (7) survenant lors de la mise en œuvre d'un procédé de modification de surface d'une zone de surface (8) d'un composant, ledit dispositif comportant une unité de traitement de données (1) qui est conçue et adaptée pour
- associer des images individuelles (6) d'une séquence d'images (5) comportant plusieurs images individuelles (6) d'une zone de surface (8) à évaluer à au moins deux classes d'images (10a, 10b), chaque image individuelle (6) montrant une section d'image (9) de la zone de surface (8) et les sections d'image (9) des images individuelles (6) se chevauchant au moins partiellement et au moins une classe d'images (10a, (10b) portant l'attribut défaut, dénommée ci-après classe d'images avec défaut (10b),
**caractérisé en ce que** l'unité de traitement de données est conçue et adaptée pour
- vérifier si une pluralité d'images individuelles (6) d'un nombre spécifiable d'images individuelles (6) qui se suivent directement dans la séquence d'images (5) ont été associées à la classe d'images avec défaut (10b), et
- émettre un signal de défaut (11) si plusieurs images individuelles (6) du nombre spécifiable d'images individuelles (6) qui se suivent directement ont été associées à la classe d'images avec défaut (10b).

12. Dispositif (100) selon la revendication 11, l'unité de traitement de données (1) comportant un réseau neuronal (2) ayant été soumis à un apprentissage pour associer les images individuelles (6) aux au moins deux classes d'images (10a, 10b).

13. Dispositif (100) selon la revendication 11 ou 12, comportant :
- une unité de caméra (3) qui est conçue et adaptée pour enregistrer une séquence d'images (5), comportant une pluralité d'images individuelles (6), de la zone surface (8) à évaluer, chaque image individuelle (6) montrant une section d'image (9) de la zone de surface (8) et les sections d'image (9) des images individuelles (6) se chevauchant au moins partiellement.

14. Dispositif (100) selon l'une des revendications 11 à 13, comportant :
- un module de modification de surface (4) conçu pour la modification de surface de la zone de surface (8) du composant.

15. Logiciel destiné à déterminer des défauts (7) survenant lors de la mise en œuvre d'un procédé de modification de surface d'une zone de surface (8) d'un composant, ledit logiciel comprenant des instructions qui, lorsque le logiciel est exécuté par un ordinateur, amènent l'ordinateur à :
- associer des images individuelles (6) d'une séquence d'images (5), comportant une pluralité d'images individuelles (6), d'une zone surface (8) à évaluer à au moins deux classes d'images (10a, 10b), chaque image individuelle (6) montrant une section d'image (9) de la zone de surface (8) et les sections d'image (8) des images individuelles (6) se chevauchant au moins partiellement et au moins une classe d'images (10a, 10b) portant l'attribut défaut, dénommée ci-après classe d'images avec défaut (10b),
**caractérisé par** des instructions qui, lorsque le logiciel est exécuté par un ordinateur, amènent l'ordinateur à :
- vérifier si plusieurs images individuelles (6) d'un nombre spécifiable d'images individuelles (6) qui se suivent directement dans la séquence d'images (8) ont été associées à la classe d'images avec défaut (10b), et
- délivrer un signal de défaut (11) si plusieurs images individuelles (6) du nombre spécifiable d'images individuelles (6) qui se suivent directement ont été associées à la classe d'images avec défaut (10b).

16. Support de données lisible par ordinateur ou signal de support de données sur lequel le logiciel selon la revendication 15 est mémorisé respectivement qui transmet le logiciel selon la revendication 15.
